Europäisches Patentamt

European Patent Office

Office européen des brevets

(19)

(11) Numéro de publication : **0 369 878 B1**

## (12) FASCICULE DE BREVET EUROPEEN

(45) Date de publication du fascicule du brevet :
**10.06.92 Bulletin 92/24**

(51) Int. Cl.⁵ : **F16J 15/54,** F16N 31/02, F16C 33/76

(21) Numéro de dépôt : **89403134.3**

(22) Date de dépôt : **15.11.89**

(54) **Enceinte de palier comportant un écran déflecteur.**

(30) Priorité : **17.11.88 FR 8814914**

(43) Date de publication de la demande :
**23.05.90 Bulletin 90/21**

(45) Mention de la délivrance du brevet :
**10.06.92 Bulletin 92/24**

(84) Etats contractants désignés :
**DE FR GB**

(56) Documents cités :
**FR-A- 2 131 797**
**FR-A- 2 245 872**
**FR-A- 2 388 181**
**GB-A- 633 181**
**GB-A- 1 450 553**
**GB-A- 1 598 926**
**US-A- 2 248 405**
**US-A- 3 259 442**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Garnier, Françis**
**4, rue de Provins-Bombon**
**F-77720 Mormant (FR)**

(74) Mandataire : **Moinat, François et al**
**S.N.E.C.M.A. Service des Brevets Boîte Postale 81**
**F-91003 Evry Cédex (FR)**

EP 0 369 878 B1

## Description

La présente invention concerne une enceinte de palier, notamment de turbomachine, munie d'un joint d'étanchéité associé à un dispositif d'écran déflecteur.

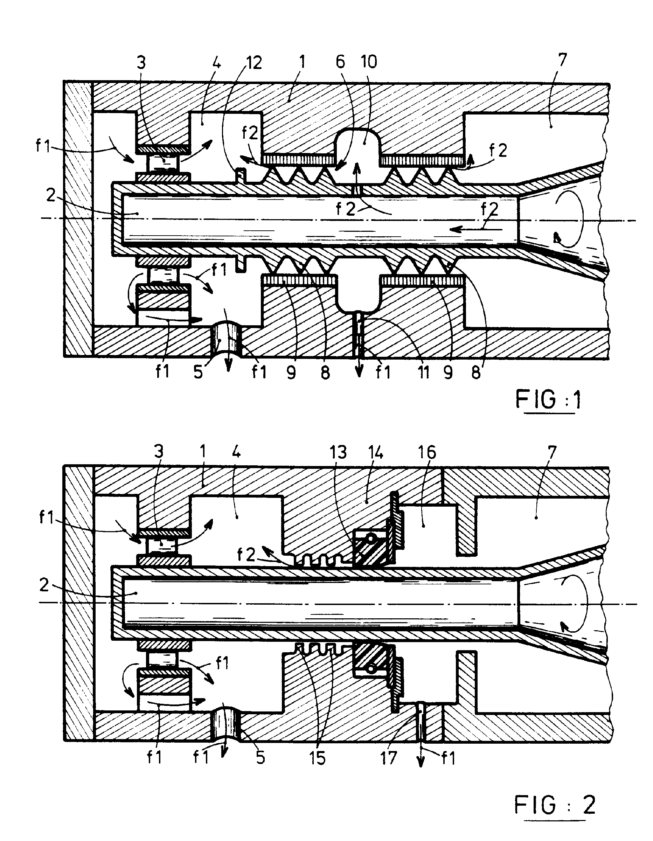

Dans une enceinte de palier, notamment de turbomachine, il est courant de ménager deux compartiments, l'un comportant un roulement et dans lequel est acheminée de l'huile, notamment en vue de la lubrification et du refroidissement dudit roulement et l'autre dans lequel est établie une pression d'air et qui communique avec d'autres enceintes à air de la machine. Il est important d'éviter toute fuite d'huile à partir du compartiment huile vers le compartiment à air et il est par conséquent habituel de prévoir dans ce cas des moyens d'étanchéité entre les deux compartiments. Les figures 1 et 2 des dessins annexés montrent deux exemples des solutions connues et couramment utilisées, notamment sur turbomachines, pour réaliser cette étanchéité. Sur les figures 1 et 2, on a ainsi représenté une enceinte fermée par des parois 1, dans laquelle est placée un arbre tournant 2, supporté notamment par un roulement 3 de palier. Le roulement 3 est placé dans un premier compartiment 4, alimenté en huile par des moyens connus en soi et non représentés au dessin, cette huile assurant notamment la lubrification et le refroidissement des éléments du roulement de palier 3. Le premier compartiment 4 est également muni de moyens d'évacuation de l'huile schématisés par un perçage 5, relié par exemple à une pompe de récupération non représentée au dessin. La circulation de l'huile est symbolisée par les flèches f1. Selon la solution représentée sur la figure 1, un joint 6 du type à labyrinthe est monté entre ledit premier compartiment 4 et un deuxième compartiment 7 voisin qui doit être préservé de toute entrée d'huile. Le joint 6 peut, par exemple et comme représenté sur la figure 1, être double et comporter deux séries de léchettes 8 coopérant avec une garniture 9 de type abradable. Une pressurisation d'air est en outre assurée à partir d'une arrivée d'air par l'intérieur de l'arbre 2. La circulation d'air est symbolisée par les flèches f2. Entre les deux étages de joint 6, a été ménagée une cavité 10 qui comporte également un trou d'évacuation 11 qui permet de drainer l'huile, chaque fois que les conditions particulières de fonctionnement amènent l'huile au contact du joint 6 et risquent d'occasionner des fuites d'huile. Un dispositif complémentaire de déflecteur 12 peut être adjoint dans le premier compartiment 4 pour constituer un barrage à la migration d'huile. Dans certaines applications, ces dispositions connues se révèlent toutefois insuffisantes pour éviter toute migration indésirable d'huile vers le deuxième compartiment à air 7. Les mêmes difficultés sont rencontrées dans l'autre solution comme représentée sur la figure 2. Dans ce cas, un joint carbone 13 est monté, de manière connue en soi, entre l'arbre 2 et la paroi de séparation 14 entre les compartiments à l'huile 4 et à l'air 7. Le joint 13 est notamment associé à des chicanes 15 et à une cavité 16 de récupération d'huile également munie d'un drain 17 d'évacuation des fuites éventuelles. Notamment, chaque fois que la pressurisation d'air dans le premier compartiment 4 est insuffisamment contrôlée par suite de variations dans les conditions de fonctionnement ou de diverses défaillances, l'efficacité de l'étanchéité primordiale entre les compartiments 4 et 7 est remise en cause.

Par ailleurs, FR-A 2 131 797 montre également l'utilisation d'un déflecteur au voisinage d'un roulement lubrifié et associé à un joint du type à labyrinthe. FR-A-2 388 181 montre l'utilisation d'une bague d'étanchéité qui se dilate radialement sous l'effet de la force centrifuge et se rétracte diamétralement par élasticité, à l'arrêt.

GB-A- 1 450 553 et GB-A- 1 598 926 décrivent le principe de joints d'étanchéité dits "à brosse" comportant une garniture externe de poils souples serrés. Une solution améliorée permettant notamment d'assurer une meilleure efficacité de l'étanchéité à l'encontre des migrations d'huile tant en procurant une solution simple aux problèmes de montage est obtenue par la mise en oeuvre de la présente invention, selon laquelle une enceinte de palier du genre précité est caractérisée en ce que le premier compartiment comporte au moins un écran déflecteur monté sur l'arbre, présentant la forme générale d'un disque et constitué d'une partie centrale rigide qui supporte une partie périphérique en matériau souple de manière que ledit écran est introduit dans ledit premier compartiment à travers un alésage de diamètre inférieur au diamètre externe de l'écran en fonctionnement.

Avantageusement, ledit écran déflecteur est constitué d'un disque métallique dont la périphérie est garnie de poils en matériau souple de manière à ce que lesdits poils se couchent lors de la mise en place de l'écran à travers l'alésage de l'enceinte et présentant une rigidité suffisante pour se redresser et former écran sous l'effet de la force centrifuge.

Divers aménagements complémentaires peuvent également être apportés à l'invention. D'autres caractéristiques et avantages de l'invention seront mieux compris à la lecture de la description qui va suivre d'un mode de réalisation de l'invention et de quelques variantes qui lui sont éventuellement applicables, en référence aux dessins annexés sur lesquels :

– la figure 1 représente, selon une vue schématique en coupe longitudinale par un plan passant par l'axe de rotation de l'arbre, une enceinte de palier comportant des moyens d'étanchéité connus et qui a fait précédemment l'objet d'une description ;

– la figure 2 représente, selon une vue analogue à celle de la figure 1, un autre exemple connu de réalisation d'une enceinte de palier comportant d'autres moyens d'étanchéité connus et qui a fait également et précédemment l'objet d'une description ;

– la figure 3 représente, selon une vue schématique analogue à celles des figures 1 et 2, une enceinte de palier comportant un écran déflecteur, selon un mode de réalisation de l'invention et associé à des moyens connus d'étanchéité analogues à ceux de la figure 1 ;

– la figure 4 représente, selon une vue schématique analogue à celle des figures 1 à 3, une enceinte de palier comportant un écran déflecteur, analogue à celui de la figure 3 et associé à des moyens connus d'étanchéité anlogues à ceux de la figure 2 ;

– la figure 5 représente, selon une vue schématique analogue à celle des figures 1 à 4, une enceinte de palier comportant plusieurs écrans déflecteurs, analogues à celui des figures 3 ou 4 et associé à des moyens connus d'étanchéité analogues à ceux de la figure 1 ;

– la figure 6 montre un détail de réalisation des moyens d'évacuation d'huile qui peuvent être associés à un écran déflecteur conforme à l'invention, selon l'une des figures 3 à 5

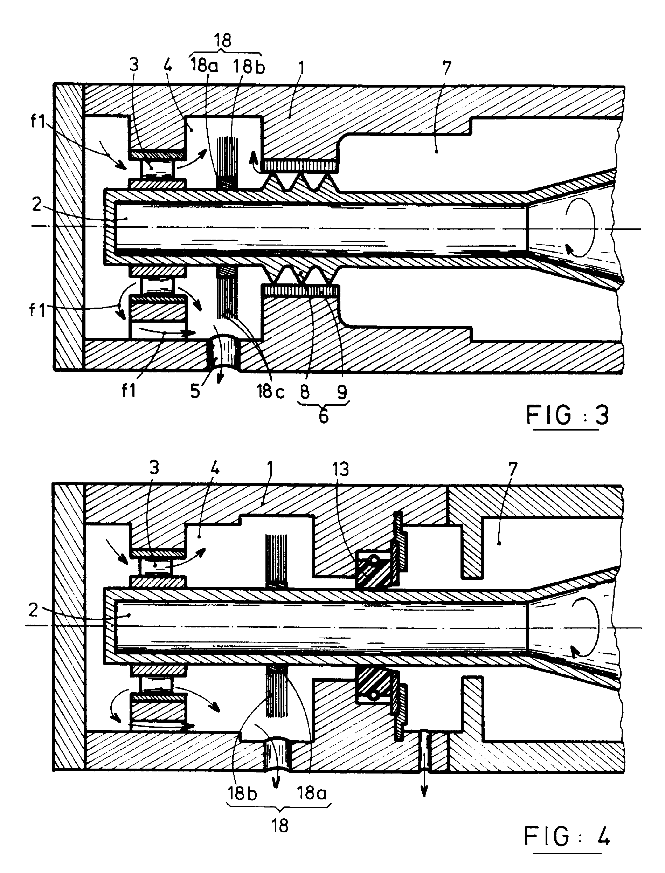

Une enceinte de palier réalisée conformément à l'invention, telle qu'elle est représentée sur la figure 3, comporte tout d'abord des éléments connus similaires à ceux de l'enceinte de palier connue qui a été précédemment décrite en référence à la figure 1. Les mêmes références sont conservées pour désigner ces éléments connus. On retrouve ainsi notamment les parois 1 de l'enceinte proprement dite. On notera particulièrement que lesdites parois 1 constituent un ensemble monobloc, non démontable, le montage des divers éléments à l'intérieur de l'enceinte devant obligatoirement, dans ce type d'applications, être effectué en les passant par l'alésage de l'enceinte. On retrouve également l'arbre tournant 2, supporté par le roulement 3 de palier, lui-même placé dans un premier compartiment 4, toujours alimenté en huile et muni de moyens d'évacuation 5 de cette huile qui circule suivant les flèches f1. Un joint d'étanchéité 6 est également monté entre le premier compartiment 4 et un second compartiment 7 voisin qui n'est accessible qu'à l'air. Le joint 6 est dans l'exemple représenté sur la figure 3, comme dans le cas de la figure 1, composé de léchettes 8 et d'une garniture abradable 9. Par contre, et de manière remarquable, conforme à l'invention, le déflecteur rigide 12 connu, précédemment utilisé selon la figure 1, est remplacé par un écran déflecteur 18 constitué d'une partie centrale 18a rigide, notamment en matériau métallique, qui supporte une partie périphérique 18b en matériau souple. Lors du montage, cette partie périphérique 18b souple se replie pour traverser l'alésage de l'enceinte de palier, notamment l'alésage du joint 6 séparant les compartiments 7 et 4. En arrivant dans le premier compartiment 4, cette partie périphérique souple 18b de l'écran déflecteur 18 se redresse, son diamètre externe étant alors nettement supérieur à celui de l'alésage au niveau du joint 6. Lorsque l'arbre 2 est entraîné en rotation, l'écran déflecteur 18 monté solidairement sur l'arbre 2, subit l'effet de la force centrifuge et la partie périphérique 18b se rigidifie, constituant notamment un barrage infranchissable à l'huile utilisée pour la lubrification et le refroidissement du roulement. Dans l'exemple de réalisation représenté sur la figure 3, ladite partie périphérique souple 18b de l'écran déflecteur 18 est constituée de tiges souples ou poils 18c, solidarisés à la partie centrale rigide 18a, formant ainsi un disque d'écran 18. Ces poils 18c peuvent être radiaux ou non.

Le choix du matériau constituant les poils est déterminé en fonction des conditions d'utilisation notamment la tenue aux températures prévues, la compatibilité avec l'huile utilisée, des caractéristiques mécaniques de résistance suffisante, de souplesse permettant le passage dans l'alésage du joint de l'enceinte et de rigidité suffisante pour former écran, en rotation. Ces critères permettent également de déterminer la densité d'implantation des poils et la largeur de l'écran 18. On utilise ainsi notamment des matériaux connus de type synthétique ou métallique. Au lieu de poils, on peut, par exemple, utiliser également des lamelles en matériau plastique procurant les mêmes résultats.

Selon la figure 4, l'application du dispositif à écran déflecteur 18 peut également être faite à une enceinte de palier comportant un joint d'étanchéité de type carbone, telle qu'elle a été précédemment décrite en référence à la figure 2.

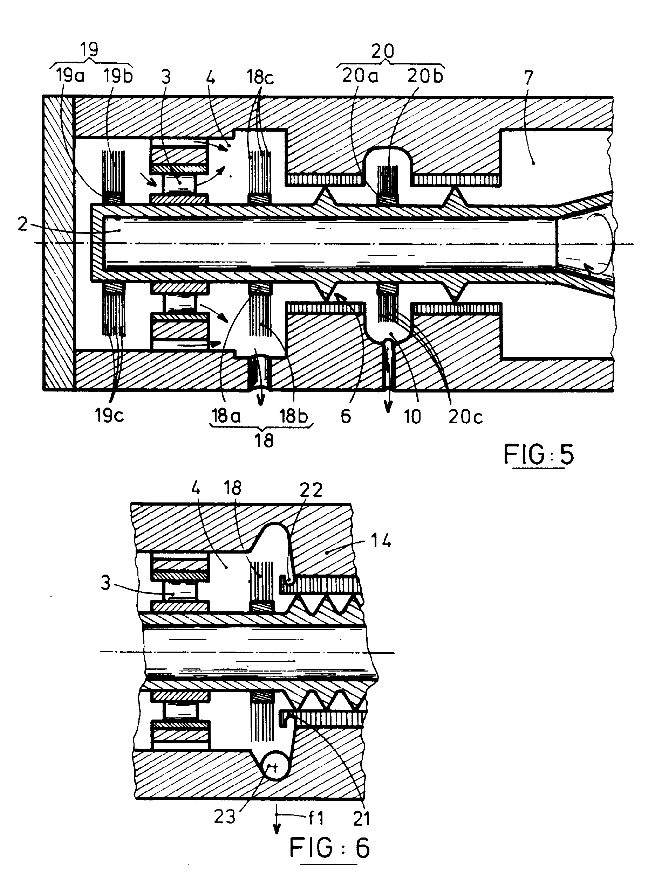

Selon une variante de réalisation, représentée sur la figure 5, le dispositif comporte, en plus de l'écran déflecteur 18, un autre écran déflecteur 19, placé également dans le premier compartiment 4, de l'autre côté du roulement 3.

De manière similaire à l'écran 18, cet écran déflecteur 19 comporte également une partie centrale rigide 19a et une partie périphérique souple 19b, constituée dans l'exemple représenté de poils 19c solidarisés à la partie centrale 19a. L'écran 19 évite une accumulation d'huile dans cette partie du compartiment 4, mais au contraire ramène l'huile vers le roulement 3. Lorsque le joint d'étanchéité 6 disposé entre les compartiments 4 et 7 est en deux parties et qu'une cavité 10 sépare les deux étages de joint, comme dans l'exemple représenté sur la figure 1, on peut également conformément à l'invention, ajouter sur l'arbre 2 un écran déflecteur 20, au niveau de ladite cavité 10, comme représenté sur la figure 5. L'écran déflecteur 20 conformément à l'invention, se compose également d'une partie centrale rigide 20a et d'une partie périphérique souple 20b, constituée, par exemple et comme précédemment, de poils 20c.

Dans ce cas, une efficacité maximale de l'étanchéité est obtenue, évitant tout risque de migration d'huile vers le deuxième compartiment 7 de l'enceinte de palier.

Quelques dispositions complémentaires concernant la récupération et les évacuations de l'huile dans le premier compartiment 4, notamment telles que représentées sur la figure 6, permettent encore d'améliorer l'efficacité du dispositif. Ainsi, la paroi transversale 14 de séparation entre les deux compartiments 4 et 7 d'enceinte comporte du côté du premier compartiment 4, au bord radial interne, une petite bordure 21 comportant une rigole circulaire 22, ce qui empêche, notamment lorsque l'arbre 2 est en position verticale, l'huile de s'écouler le long de l'alésage. Afin d'utiliser l'énergie cinétique communiquée à l'huile par l'écran déflecteur 18 en rotation, l'orifice 23, d'évacuation et d'aspiration d'huile aménagée au point bas du premier compartiment 4 est orienté tangentiellement. L'orifice 23 est en outre disposé de manière à aspirer l'huile qui se rassemble dans la rigole 22, lorsque l'arbre est en position verticale.

## Revendications

1. Enceinte de palier, notamment de turbomachine, comportant un arbre tournant (2) supporté par au moins un roulement (3) placé dans un premier compartiment (4) dans lequel circule de l'huile de lubrification et de refroidissement dudit roulement (3) et un deuxième compartiment à air (7), séparé du premier compartiment (4) par des moyens d'étanchéité (6 ; 13) à l'huile caractérisée en ce que ledit premier compartiment (4) comporte au moins un écran déflecteur (18) monté sur l'arbre (2), présentant la forme générale d'un disque et constitué d'une partie centrale (18a) rigide qui supporte une partie périphérique (18b) en matériau souple de manière que ledit écran (18) est introduit dans ledit premier compartiment (4) à travers un alésage de diamètre inférieur au diamètre externe de l'écran en fonctionnement.

2. Enceinte de palier selon la revendication 1 dans lequel ledit écran déflecteur (18) est constitué d'un disque métallique (18a) dont la périphérie est garnie de poils (18c) en matériau souple de manière à ce que lesdits poils (18c) se couchent lors de la mise en place de l'écran (18) à travers l'alésage de l'enceinte (4) et présentent une rigidité suffisante pour se redresser et former écran sous l'effet de la force centrifuge.

3. Enceinte de palier selon l'une des revendications 1 ou 2 dans laquelle un écran déflecteur (18, 19) est monté sur l'arbre (2) de chaque côté du roulement (3) dans ledit premier compartiment (4) à huile.

4. Enceinte de palier selon l'une quelconque des revendications 1 à 3 dans laquelle un écran déflecteur (20) est ajouté sur l'arbre (2) dans la cavité (10) ménagée entre deux étages de joint d'étanchéité (6) entre les deux compartiments (4,7) d'enceinte.

5. Enceinte de palier selon l'une quelconque des revendications 1 à 4 dans laquelle une petite bordure (21) comportant une rigole (22) circulaire est ménagée sur la paroi transversale (14) de séparation entre les deux compartiments (4,7) d'enceinte, du côté du premier compartiment (4) et au bord radial interne et l'orifice (23) d'aspiration pour l'évacuation de l'huile dudit premier compartiment (4) est placé à la périphérie du compartiment (4), au point le plus bas et tangentiellement et est disposé de manière à aspirer l'huile de ladite rigole (22) circulaire, notamment lorsque l'arbre (2) est en position verticale.

## Patentansprüche

1. Lagerkammer, insbesondere für Turbomaschinenlager, mit einer in wenigstens einem Wälzlager (3) gelagerten Drehwelle (2), wobei das Wälzlager (3) in einem ersten Raum (4) angeordnet ist, in dem Öl zur Schmierung und Kühlung des Wälzlagers (2) zirkuliert, ferner mit einem von dem ersten Raum (4) durch Öldichtungsmittel (6; 13) getrennten zweiten Raum (7) für Luft, **dadurch gekennzeichnet,** daß der erste Raum (4) wenigstens einen auf der Welle (2) montierten, im wesentlichen scheibenförmigen Abweisschirm (18) enthält, der aus einem zentralen starren Teil (18a) besteht, der einen peripheren Teil (18b) aus weichem Material trägt, so daß der Abweisschirm (18) durch eine Bohrung, deren Durchmesser kleiner ist als der Außendurchmesser des Abweisschirms im Betriebszustand, in den ersten Raum (4) einführbar ist.

2. Lagerkammer nach Anspruch 1, bei dem der Abweisschirm (18) aus einer Metallscheibe (18a) besteht, die an ihrem Umfang mit Borsten (18c) aus weichem Material bestückt ist, so daß diese Borsten (18c) sich niederlegen, wenn der Abweisschirm (18) durch die genannte Bohrung der Kammer (4) in Position gebracht wird, wobei die Borsten genügend Steifigkeit besitzen, um sich unter der Einwirkung der Zentrifugalkraft wieder aufzurichten und einen Schirm zu bilden.

3. Lagerkammer nach einem der Ansprüche 1 oder 2, bei dem in dem Raum (4) für die Ölzirkulation zu beiden Seiten des Wälzlagers (3) jeweils ein Abweisschirm (18, 19) auf der Welle (2) montiert ist.

4. Lagerkammer nach einem der Ansprüche 1 bis 3, bei dem zwischen den beiden Räumen der Lagerkammer in dem zwischen zwei Dichtungsstufen (6) angebrachten Hohlraum (10) ein zusätzlicher Abweisschirm (20) auf der Welle (2) angeordnet ist.

5. Lagerkammer nach einem der Ansprüche 1 bis 4, bei dem an der transversalen Trennwand (14) zwischen den beiden Räumen (4, 7) der Lagerkammer auf der Seite des ersten Raums (4) eine kleine Randleiste (21) mit einer kreisförmigen Tropfrinne (22) an dem radial inneren Rand vorgesehen ist, und bei dem die Absaugöffnung (23) für den Austritt des Öls aus dem ersten Raum (4) tangential am tiefsten Punkt der Peripherie des Raums (4) angeordnet ist, so daß das Öl, insbesondere dann, wenn die Welle (2) eine vertikale Position einnimmt, von der genannten kreisförmigen Tropfrinne (22) abgesaugt wird.

**Claims**

1. Bearing enclosure, especially for a turbo-engine, comprising a rotating shaft (2) supported by at least one bearing (3) placed in a first compartment (4), in which the oil for lubricating and cooling the said bearing (3) circulates, and a second, air compartment (7), separated from the first compartment (4) by oil-sealing means (6; 13), characterised in that the said first compartment (4) comprises at least one baffle-screen (18) mounted on the shaft (2), having the general shape of a disc and consisting of a rigid central portion (18a) which supports a peripheral portion (18b) made from flexible material in such a manner that the said screen (18) is inserted into the said first compartment (4) through a borehole having a diameter less than the external diameter of the screen when in operation.

2. Bearing enclosure according to Claim 1, in which the said baffle-screen (18) consists of a metal disc (18a) whose periphery is furnished with hairs (18c) made from flexible material in such a manner that the said hairs (18c) lie down during the installation of the screen (18) through the borehole of the enclosure (4) and have a rigidity sufficient for straightening out and forming a screen under the effect of the centrifugal force.

3. Bearing enclosure according to one of Claims 1 and 2, in which a baffle-screen (18, 19) is mounted on the shaft (2) on both sides of the bearing (3) in the said first oil compartment (4).

4. Bearing enclosure according to any one of Claims 1 to 3, in which a baffle-screen (20) is added to the shaft (2) in the cavity (10) provided between two sealing gland stages (6) between the two enclosure compartments (4, 7).

5. Bearing enclosure according to any one of Claims 1 to 4, in which a small rim (21) comprising a circular groove (22) is provided on the transverse separating wall (14) between the two enclosure compartments (4, 7), on the first compartment (4) side and at the internal radial edge, and the suction port (23) for draining away the oil from the said first compartment (4) is placed on the periphery of the compartment (4), at the lowest point and tangentially, and is disposed in such a manner as to suck out the oil from the said circular groove (22), especially when the shaft (2) is in a vertical position.

FIG : 1

FIG : 2

EP 0 369 878 B1

FIG : 3

FIG : 4

7

FIG : 5

FIG : 6